# EUROPÄISCHE PATENTSCHRIFT

(11) **EP 1 159 157 B1**
(45) Veröffentlichungstag und Bekanntmachung des Hinweises auf die Patenterteilung: **13.05.2009**
(21) Anmeldenummer: 00907666.2
(22) Anmeldetag: 03.03.2000
(51) Int. Cl.: B60R 13/02

(54) **DEKORELEMENT**
DECORATIVE ELEMENT
ELEMENT DECORATIF

(30) Priorität: 04.03.1999 DE 19909472
(43) Veröffentlichungstag der Anmeldung: 05.12.2001
(73) Patentinhaber: Bayerische Motoren Werke Aktiengesellschaft, 80809 München (DE); Delphi Technologies, Inc., Troy, MI 48007 (US)
(72) Erfinder: SCHMIDMAYER, Gerhard, D-85457 Wörth (DE); MÜLLER, Siegfried, D-85305 Jetzendorf (DE); VORNHOF, Klaus, D-85521 Ottobrunn (DE); WITZ, Grégoire, D-42105 Wuppertal (DE); KERKHOFF, Markus, D-42284 Wuppertal (DE)
(74) Vertreter: Schernhammer, Herbert
(86) Internationale Anmeldenummer: PCT/EP2000/001881
(87) Internationale Veröffentlichungsnummer: WO 2000/051843

(56) Entgegenhaltungen:
- DE-A- 19 724 486
- DE-U- 29 802 608
- DE-U- 29 808 949
- GB-A- 2 308 216
- US-A- 5 434 013

## Beschreibung

Die Erfindung betrifft ein Dekorelement für die Innenausstattung eines Fahrzeuges.

Bekannte Dekorelemente sind streifenförmig oder flächig als Zierleisten oder Zierflächen in die Innenausstattung von Kraftfahrzeugen eingesetzt, beispielsweise in die Türinnenverkleidung oder in die Armaturentafel. Die bekannten Dekorelemente haben z. B. das Erscheinungsbild eines bestimmten Materials (Metall, Holz etc.) oder werden als Einsätze mit einer bestimmten Farbe, die sich eindeutig von der Farbe des Innenausstattungselementes abhebt, zur "Belebung" des Fahrzeuginnenraums eingesetzt.

Außerdem sind aus der US 5,434,013 elektrolumineszierende Dekorelemente bekannt, die unterschiedliche Farben annehmen können. Die Farbänderung kann vom Fahrzeugnutzer oder beispielsweise durch ein Tongerät bewirkt werden.

Aus der DE 298 08 949 U1 ist eine Leuchtvorrichtung in einer Fahrzeugtür bekannt, die eine Mehrzahl von monochromen Türleuchten aufweist.

Die JP 07129100 A betrifft ein aus neun verschiedenfarbigen Leuchtdioden (LEDs) zusammengesetztes Leuchtelement, das als ein "Pixel" für ein größeres "Panel" mit beispielsweise 16 mal 16 Pixeln dient.

Schließlich ist aus der US 5,673,995 A eine Anzeigeeinheit mit LEDs bekannt, die beispielsweise entweder rotes oder oranges Licht aussenden.

Aufgabe der Erfindung ist es, eine Alternative zu dem aus der US 5,434,013 bekannten Dekorelement bereitzustellen.

Diese Aufgabe wird durch ein Dekorelement mit den Merkmalen des Anspruchs 1 gelöst. Die Ansprüche 3 bis 5 beschreiben Verfahren zur Ansteuerung des erfindungsgemäßen Dekorelements.

Durch entsprechende Ansteuerung des Dekorelementes kann dessen Farbe verändert werden, um für den Fahrzeugnutzer die Möglichkeit zu schaffen, den Innenraum seines Fahrzeuges farblich unterschiedlich zu gestalten. Damit kann der Charakter des Interieurs des Fahrzeuges durch die eingesetzten Dekorelemente verändert werden, beispielsweise von gediegen bis fröhlich, von beruhigend bis stimulierend, abhängig von der jeweiligen Grundeinstellung unterschiedlicher Fahrzeugnutzer oder auch "je nach Stimmungslage" ein und desselben Fahrzeugnutzers. Die Farbänderung erfolgt - ohne Austausch der Dekorelemente - durch entsprechende Ansteuerung durch den Fahrzeugnutzer. Die Farbänderung kann gemäß Anspruch 3 auch selbsttätig durch Parameter aus dem Fahrbetrieb erfolgen. Beispielsweise kann das Dekorelement in Abhängigkeit von der gewählten Charakteristik des Automatikgetriebes des Fahrzeugs angesteuert werden (Anspruch 4).

Als Dekorelemente kommen alle Elemente in Frage, die unter dem Einfluß einer Steuergröße, bevorzugt einer elektrischen Steuergröße, ihre Farbe ändern. Weitere mögliche Steuergrößen sind Temperatur, mechanische Beanspruchung, Intensität des Lichteinfalls (Anspruch 5).

Als farbveränderliches Element kommen erfindungsgemäß LEDs oder Miniaturglühbirnen unterschiedlicher Farben in Frage, zwischen denen umgeschaltet wird. Auch mit Lichtleitern, die von Lichtquellen unterschiedlicher Farben bzw. von einer Lichtquelle unter Zwischenschaltung verschiedenfarbiger Filter gespeist werden bzw. wird, kann die Farbe eines erfindungsgemäßen Dekorelements verändert werden.

Neben Dekorelementen, die unmittelbar Licht mit einem bestimmten Farbton emittieren, sind ferner "transmittierende" Dekorelemente zu nennen, bei denen zwischen der Lichtquelle und dem Betrachter eine den Lichtaustritt beeinflussende Schicht angeordnet ist. Eine derartige Schicht kann z. B. von einer Flüssigkristallzelle gebildet werden, wie dies bei den sogenannten LCDs (liquid crystal displays) der Fall ist. Somit kann die Farbänderung bei erfindungsgemäßen Dekorelementen in Analogie zu bekannten Bildschirmen in LCD-Technik erreicht werden. Die in erfindungsgemäßen Dekorelementen eingesetzten LCDs können auch rein reflektierend arbeiten.

Als farbveränderliche Elemente in erfindungsgemäßen Dekorelementen eignen sich ferner beispielsweise elektrolumineszierende Anzeigen (EL-Panels), Vakuumfluoreszenz-Anzeigen (VF-Displays), Plasma Display Panels (PDP), Field Emission Displays (FED), Digital Micromirror. Devices (DVD), etc.

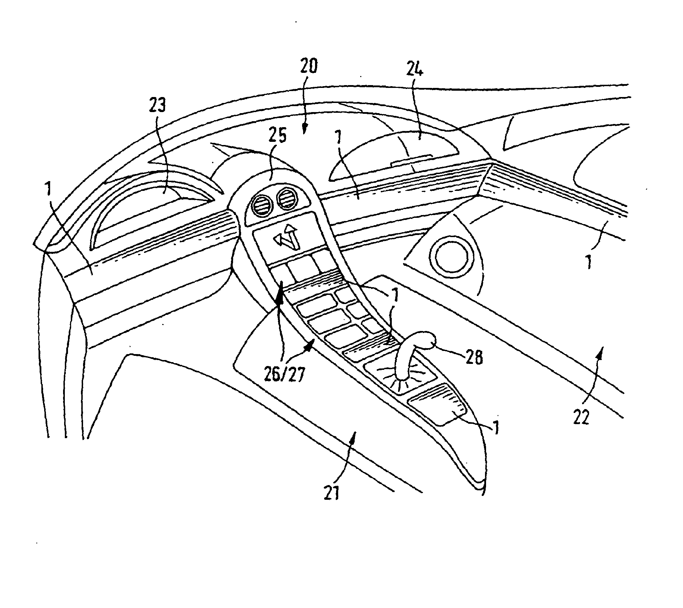

Ein mögliches Ausführungsbeispiel der Erfindung ist in der Zeichnung dargestellt und wird nachfolgend näher erläutert. Die einzige Figur zeigt in perspektivischer Darstellung einen Innenraum eines Kraftfahrzeuges mit erfindungsgemäßen Dekorelementen.

Ein Innenraum eines Kraftfahrzeuges weist unter anderem eine Instrumententafel 20, eine Mittelkonsole 21 sowie Türinnenverkleidungen 22 auf. Sowohl im Bereich unterhalb einer Instrumentenkombination 23 als auch unterhalb einer beifahrerseitigen Ablagefläche 24 befindet sich ein erfindungsgemäßes Dekorelement 1 in Form einer Zierleiste. Die Dekorelemente 1 erstrecken sich jeweils vom fahrzeugaußenseitigen Endabschnitt der Instrumententafel 20 bis zu einem in die Instrumententafel hineingezogenen Abschnitt 25 der Mittelkonsole 21. Die von den Dekorelementen 1 in der Instrumententafel 20 gebildete Linie wird von weiteren Dekorelefnenten 1 in den Türinnenverkleidungen 22 (hier nur Beifahrerseite dargestellt) auf Höhe der Brüstungslinie fortgesetzt. Außerdem sind in die Mittelkonsole 21 weitere Dekorelemente 1 zwischen Bedienfeldern 26, Ablagefächern 27 und einem Bedienelement 28 eingesetzt. Neben den dargestellten Dekorelementen 1 sind ebenso rein streifenförmige Dekorelemente 1 zur Bildung farbiger Zierlinien möglich. Andererseits können die erfindungsgemäßen Dekorelemente 1 auch großflächig, beispielsweise in eine Türinnenverkleidung 22, eingesetzt werden.

Die Farbe der Dekorelemente 1 kann durch entsprechende Ansteuerung verändert werden, um damit das Erscheinungsbild des Fahrzeuginnenraums zu beeinflussen. Dabei ist sowohl eine einheitliche Farbe aller Dekorelemente 1 als auch eine unterschiedliche Farbgebung der einzelnen Dekorelemente 1 möglich.

## Patentansprüche

1. Dekorelement (1) für die Innenausstattung eines Fahrzeuges, wobei das Dekorelement (1) unter dem Einfluss einer Steuergröße seine Farbe verändert,
**dadurch gekennzeichnet, dass** das Dekorelement (1)
- mehrere einzelne Lichtquellen unterschiedlicher Farben sowie eine Einrichtung zur Umschaltung zwischen den Lichtquellen aufweist, wobei die Lichtquellen von LEDs oder Miniaturglühbirnen gebildet werden und die LEDs oder Miniaturglühbirnen gegebenenfalls Lichtleiter speisen oder
- einen Lichtleiter aufweist, der von einer Lichtquelle unter Zwischenschaltung verschiedenfarbiger Filter gespeist wird.

2. Innenausstattungsteil (20, 21, 22) mit einem Dekorelement (1) nach Anspruch 1.

3. Verfahren zur Ansteuerung eines Dekorelements (1) nach Anspruch 1,
**dadurch gekennzeichnet, dass** das Dekorelement (1) durch Parameter aus dem Fahrbetrieb angesteuert wird.

4. Verfahren nach Anspruch 3,
**dadurch gekennzeichnet, dass** das Dekorelement (1) in Abhängigkeit von der gewählten Charakteristik eines Automatikgetriebes des Fahrzeugs angesteuert wird.

5. Verfahren zur Ansteuerung eines Dekorelements (1) nach Anspruch 1,
**dadurch gekennzeichnet, dass** als Steuergröße für die Farbänderung des Dekorelements (1) die Temperatur und/oder die mechanische Beanspruchung und/oder die Intensität des Lichteinfalls verwendet wird.

## Claims

1. A decorative element (1) for the interior fittings of a vehicle, wherein the decorative element (1) changes colour under the influence of an actuating variable,
**characterised in that** the decorative element (1);
- comprises a number of individual light sources in different colours and a device for switching from one light source to another, wherein the light sources are LEDs or miniature incandescent bulbs and the LEDs or incandescent bulbs supply optical fibres if required, or
- comprises an optical fibre supplied by a light source with interposition of variously coloured filters.

2. An interior fitting part (20, 21, 22) comprising a decorative element (1) according to claim 1.

3. A method of actuating a decorative element (1) according to claim 1,
**characterised in that** the decorative element (1) is actuated by parameters based on operation while driving.

4. A method according to claim 3,
**characterised in that** the decorative element (1) is actuated in dependence on the chosen characteristic of an automatic gear unit of the vehicle.

5. A method of actuating a decorative element (1) according to claim 1,
**characterised in that** the actuating variable used for changing the colour of the decorative element (1) is the temperature and/or the mechanical stress and/or the intensity of the incident light.

## Revendications

1. Elément décoratif (1) pour l'équipement intérieur d'un véhicule, cet élément décoratif (1) changeant de couleur sous l'influence d'une grandeur de commande,
**caractérisé en ce que**
l'élément décoratif (1) comporte
- plusieurs sources lumineuses individuelles de couleurs différentes ainsi qu'un dispositif pour la commutation entre les sources lumineuses, les sources lumineuses étant formées de diodes électroluminescentes LED ou d'ampoules à incandescence, miniatures, et les diodes LED ou les ampoules à incandescence miniatures alimentent, le cas échéant, des guides de lumière, ou
- un guide de lumière alimenté par une source lumineuse avec l'interposition de filtres de différentes couleurs.

2. Elément d'équipement intérieur (20, 21, 22) comportant un élément décoratif (1) selon la revendication 1.

3. Procédé de commande d'un élément décoratif (1) selon la revendication 1,
**caractérisé en ce que**
l'élément décoratif (1) est commandé par des paramètres provenant de la marche du véhicule.

4. Procédé d'un élément décoratif (1) selon la revendication 3,
**caractérisé en ce que**
l'élément décoratif (1) est commandé en fonction de caractéristiques sélectionnées d'une transmission automatique de véhicule.

5. Procédé de commande d'un élément décoratif (1) selon la revendication 1,
**caractérisé en ce que**
comme grandeur de commande pour la variation de couleurs de l'élément décoratif (1), on utilise la température et/ou la sollicitation mécanique et/ou l'intensité de la lumière incidente.
